# EUROPEAN PATENT APPLICATION

(11) **EP 4 043 849 A1**
(43) Date of publication of application: **17.08.2022**
(21) Application number: 20874244.5
(22) Date of filing: 28.09.2020
(51) Int. Cl.: G01L 1/26, G01L 3/14

(54) **STRAIN SENSOR FIXING DEVICE AND TORQUE SENSOR USING SAME**

(30) Priority: 09.10.2019 JP 2019186029; 09.10.2019 JP 2019186030
(71) Applicant: Nidec Copal Electronics Corporation, Shinjuku-ku Tokyo 160-0023 (JP)
(72) Inventor: TAKADA, Kazuhiro, Sano-shi, Tochigi 327-0104 (JP); INOGUCHI, Takatoshi, Sano-shi, Tochigi 327-0104 (JP); ENDO, Takayuki, Sano-shi, Tochigi 327-0104 (JP)
(74) Representative: Zech, Stefan Markus
(86) International application number: PCT/JP2020/036738
(87) International publication number: WO 2021/070666

(57) **Abstract**

Strain sensor fixing device (40a, 40b) includes a fixing member (41) including a first side (41c), a second side (41d) parallel to the first side, and a surface (41b) provided between the first side (41c) and the second side (41d) and including an opening part (41f), the first side (41c) being brought into contact with the first structure (11), the second side (41d) being brought into contact with an end part of the flexure body constituting the strain sensor provided on the first structure (11), a screw (42) inserted into the opening part (41f) and screwed into the first structure (11), and a rotation stopping part (35a, 35b, 36a, 36b) bringing the fixing member (41) into line contact or point contact with the other part to prevent rotation of the fixing member (41).

## Description

### Technical Field

Embodiments of the present invention described herein relate generally to, for example, a fixing device for a strain sensor provided on a joint of a robot arm and a torque sensor using the same.

### Background Art

A torque sensor includes a first structure to which torque is applied, a second structure from which torque is output, and a plurality of flexure parts serving as beams connecting the first structure and the second structure, and a plurality of strain gauges serving as sensor elements are arranged at the flexure parts. A bridge circuit is constituted by these strain gauges (cf., for example, Patent Literature 1, 2, and 3) .

### Citation List

### Patent Literatures

Patent Literature 1: JP 2013-096735 A
Patent Literature 2: JP 2015-049209 A
Patent Literature 3: JP 2017-172983 A

### Summary of Invention

In general, a strain sensor is provided with a plurality of strain gauges as sensor elements on a metal flexure body. As a method of fixing the strain sensor to the torque sensor, for example, a method using welding, a method using an adhesive, and a method using a plurality of screws are employed.

However, when the strain sensor is fixed to the structure by welding, the temperature of the flexure body is rapidly increased by welding. For this reason, the composition and shape of the flexure body and the strain gauge may change, which may affect the performance of the strain sensor.

In addition, when the strain sensor is fixed to the structure using an adhesive, a low rigidity adhesive is interposed between the flexure body and the structure. For this reason, the deformation of the structure is not directly transmitted to the flexure body, which may reduce the sensitivity of the strain sensor.

In contrast, when the strain sensor is fixed to the structure using screws, a pressing member is provided on the flexure body, the pressing member is fastened to the structure with screws, and the flexure body is fixed to the structure by the pressing member. In the case of such a configuration, since the pressing member and the flexure body are in surface contact with each other, the pressing member needs to maintain a high pressing force against the flexure body. To maintain a high pressing force, it is necessary to increase the size and rigidity of the pressing member, increase the size of the screws, and increase the number of screws. It is therefore difficult to reduce the size and thickness of the torque sensor provided with the pressing member and the screws.

Embodiments described herein aim to provide a strain sensor fixing device capable of preventing deterioration of sensor performance and an increase in size of the device configuration, and reliably fixing the strain sensor to a structure, and a torque sensor using the strain sensor fixing device.

According to the embodiments, a strain sensor fixing device includes: a fixing member including a first side, a second side parallel to the first side, and a surface provided between the first side and the second side and including an opening part, the first side being brought into contact with the first structure, the second side being brought into contact with an end part of the flexure body constituting the strain sensor provided on the first structure; a screw inserted into the opening part and screwed into the first structure; and a rotation stopping part bringing the fixing member into line contact or point contact with the other part to prevent rotation of the fixing member.

### Brief Description of Drawings

FIG. 1 is a perspective view showing a torque sensor to which the embodiments are applied.
FIG. 2 is a plan view showing FIG. 1 except for parts thereof.
FIG. 3 is an enlarged perspective view showing a mounting portion of a strain sensor shown in FIG. 2 as taken out.
FIG. 4 is an enlarged plan view showing parts of FIG. 2 as taken out.
FIG. 5 is a cross-sectional view as viewed along line V-V of FIG. 4.
FIG. 6 is an enlarged perspective view showing a fixing plate as a fixing member shown in FIG. 3.
FIG. 7 is a cross-sectional view showing a first modified example of the fixing plate.
FIG. 8 is a cross-sectional view showing a second modified example of the fixing plate.
FIG. 9 is a cross-sectional view showing a third modified example of the fixing plate.
FIG. 10 is a configuration diagram showing the vicinity of the first structure provided with a rotation stopping part according to a first embodiment.
FIG. 11 is a configuration diagram showing the vicinity of the first structure provided with a rotation stopping part according to a second embodiment.
FIG. 12 is a perspective view showing the fixing plate according to the third embodiment as viewed from below.
FIG. 13 is a configuration diagram showing the vicinity of the first structure provided with a rotation stopping part according to a third embodiment.
FIG. 14 is a perspective view showing a fixing plate according to a fourth embodiment as viewed from below.
FIG. 15 is a configuration diagram showing the vicinity of the first structure provided with a rotation stopping part according to the fourth embodiment.
FIG. 16 is a configuration diagram showing the vicinity of the first structure provided with a positioning part according to a fifth embodiment.
FIG. 17 is a configuration diagram showing the vicinity of the first structure provided with a positioning part according to a sixth embodiment.
FIG. 18 is a perspective view showing a fixing plate according to a seventh embodiment as viewed from below.
FIG. 19 is a configuration diagram showing the vicinity of the first structure provided with a positioning part according to the seventh embodiment.
FIG. 20 is a perspective view showing a fixing plate according to an eighth embodiment as viewed from below.
FIG. 21 is a configuration diagram showing the vicinity of the first structure provided with a positioning part according to the eighth embodiment.
FIG. 22 is a perspective view showing a fixing plate according to a ninth embodiment as viewed from below.
FIG. 23 is a configuration diagram showing a positioning part provided on the first structure side according to the ninth embodiment.
FIG. 24 is a perspective view showing a fixing plate according to a tenth embodiment as viewed from below.
FIG. 25 is a configuration diagram showing a positioning part provided on a first structure side according to the tenth embodiment.
FIG. 26 is a perspective view showing a positioning part provided on the first structure side according to the tenth embodiment.

Mode for Carrying Out Invention Embodiments will be described hereinafter with reference to the accompanying drawings. In the drawings, the same parts are denoted by the same reference numerals.

### (Basic Configuration of Each Embodiment)

First, a basic configuration of each embodiment will be described.

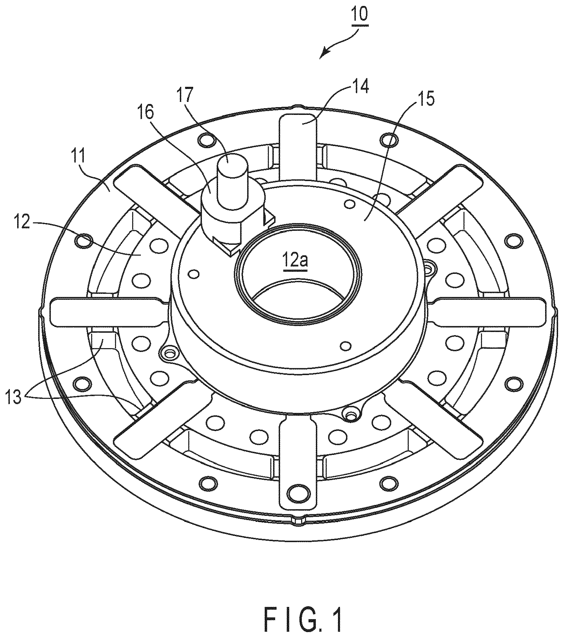

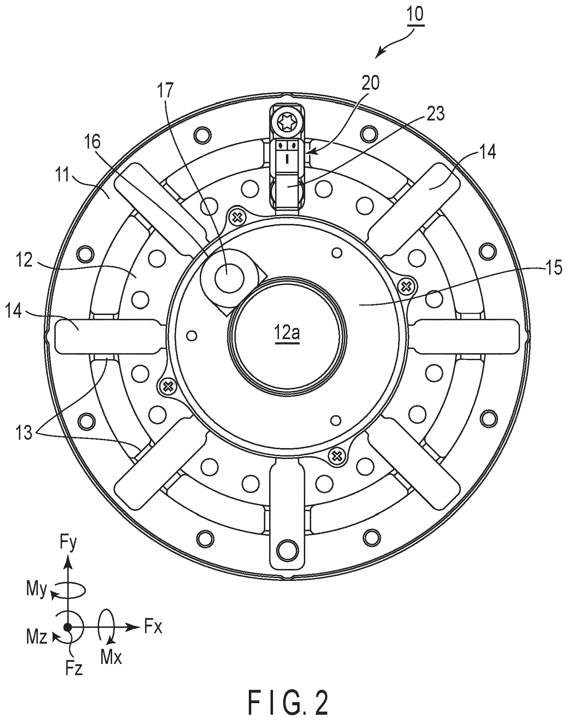

FIG. 1 and FIG. 2 show an example of a torque sensor 10 to which the embodiments are applied. The configuration of the torque sensor 10 is not limited to this, and can be applied to torque sensors having various configurations. In addition, the embodiments can be applied not only to a torque sensor, but also to a force sensor using a strain gauge or the like.

In FIG. 1, the torque sensor 10 comprises a first structure 11, a second structure 12, a plurality of third structures 13, a plurality of waterproof caps 14, a casing 15, a bush 16, and a cable 17.

The first structure 11 and the second structure 12 are formed in an annular shape, and a diameter of the second structure 12 is smaller than a diameter of the first structure 11. The second structure 12 is arranged concentrically with the first structure 11, and the first structure 11 and the second structure 12 are coupled by the third structures 13 serving as a plurality of beams arranged radially. The number of the third structures 13 is, for example, eight, and the eight third structures 13 are arranged at regular intervals. The number of the third structures 13 is not limited to eight.

The first structure 11 is coupled to, for example, a to-be- measured object, the second structure 12 is connected to the other structure (not shown), and the plurality of third structures 13 transmit torque (moment (Mz) shown in FIG. 2) from the first structure 11 to the second structure 12. On the contrary, the second structure 12 may be coupled to the to-be-measured body, the first structure 11 may be connected to the other structure (not shown), and the torque may be transmitted from the second structure 12 to the first structure 11 via the plurality of third structures 13.

In the case of the force sensor, the first structure 11, the second structure 12, and the third structures 13 are deformed three-dimensionally to detect the force (Fx, Fy, Fz) and the moment (Mx, My, Mz) with respect to three orthogonal axes (x, y, z) shown in FIG. 2.

The first structure 11, the second structure 12, and the plurality of third structures 13 are formed of a metal, for example, stainless steel, but a material other than metal can be used if a mechanically sufficient strength can be obtained for the applied torque.

As shown in FIG. 2, a strain sensor 20 to be described later is arranged so as to correspond to each of the third structures 13, and each strain sensor 20 is covered with a cap 14. In FIG. 2, one cap 14 is removed to expose the strain sensor 20. In the embodiments, the number of strain sensors 20 is set to be the same as the number of the third structures 13, but the number is not limited to this, and the number of strain sensors 20 may be smaller than the number of the third structures 13.

The configuration of each strain sensor 20 is the same. The strain sensor 20 is provided between the first structure 11 and the second structure 12. That is, one end of the strain sensor 20 is joined to the first structure 11, and the other end of the strain sensor 20 is joined to the second structure 12, as described later.

The second structure 12 includes a hollow part 12a, and the casing 15 is attached to the second structure 12 around the hollow part 12a. A processing circuit (not shown) that processes an electric signal supplied from the strain sensor 20 and generates a torque detection signal as a sensor signal, is provided inside the casing 15.

A bush 16 for holding the cable 17 is provided at a part of the casing 15. One end (not shown) of the cable 17 is connected to a processing circuit in the casing 15, and the other end of the cable 17 is passed through, for example, the hollow part 12a. The cable 17 supplies power to the processing circuit from the outside, and outputs the sensor signal processed by the processing circuit to the outside. Since the configuration of the processing circuit is not essential to the embodiments, descriptions thereof will be omitted.

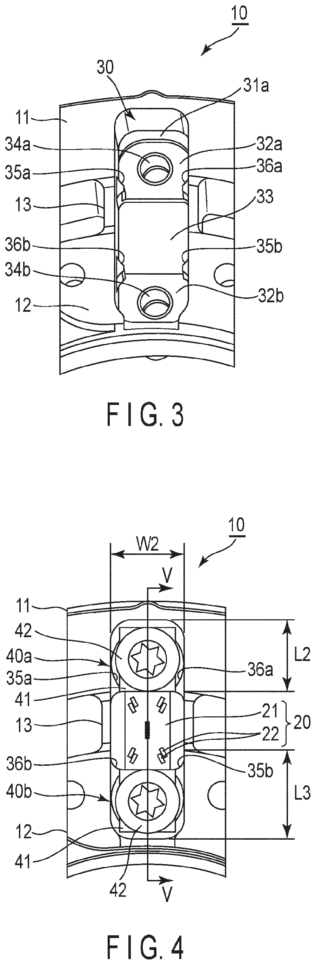

FIG. 3, FIG. 4, and FIG. 5 show the strain sensor 20, and a mounting structure of the strain sensor 20.

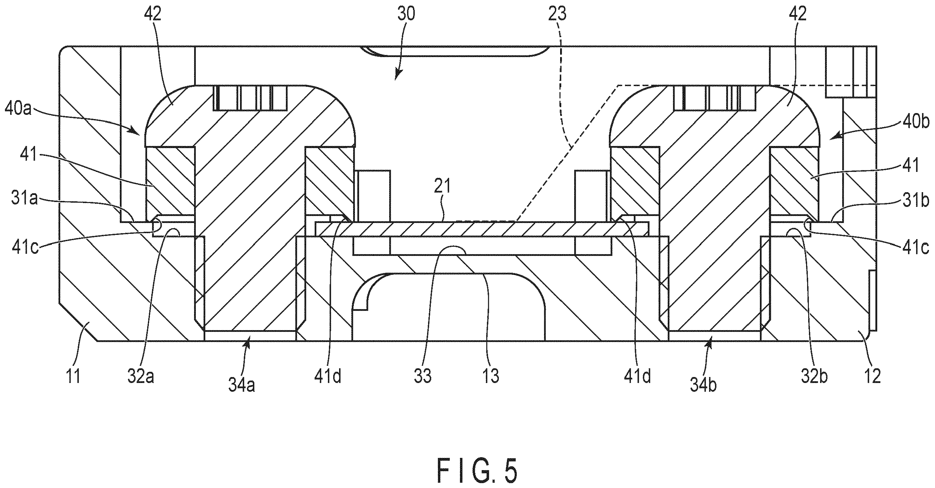

FIG. 3 shows a configuration of a mounting portion of the strain sensor 20. A recess portion 30 is integrally formed in the first structure 11, the second structure 12, and the plurality of third structures 13. A first bottom part 31a and a second bottom part 32a lower than the first bottom part 31a are provided at a portion corresponding to the first structure 11, at a bottom of the recess portion 30. A difference in depth between the first bottom part 31a and the second bottom part 32a is made substantially equal to a thickness of a flexure body 21 as shown in FIG. 5.

A first bottom part 31b and a second bottom part 32b lower than the first bottom part 31b are also provided at a portion corresponding to the second structure 12, at the bottom of the recess portion 30.

A difference in depth between the first bottom part 31b and the second bottom part 32b is also made substantially equal to the thickness of the flexure body 21.

A third bottom part 33 lower than the second bottom parts 32a and 32b is provided at a portion corresponding to the third structure 13, at the bottom of the recess portion 30.

An opening part 34a is provided in a substantially central part of the second bottom part 32a corresponding to the first structure 11, and a screw thread is provided in the opening part 34a. An opening part 34b is also provided in a substantially central part of the second bottom part 32b corresponding to the second structure 12, and a screw thread is provided in the opening part 34b.

As shown in FIG. 4, the strain sensor 20 is provided between the first structure 11 and the second structure 12 in the recess portion 30. The strain sensor 20 comprises, for example, a metal flexure body 21, and a plurality of strain gauges 22 serving as sensor elements arranged on one surface of the flexure body 21.

The strain gauges 22 are, for example, thin film resistance elements, and a resistance value thereof changes in accordance with deformation of the flexure body 21. The plurality of strain gauges 22 constitute a bridge circuit (not shown), and the change in resistance value is detected as an electric signal by the bridge circuit. The plurality of strain gauges 22 are connected to one end of a flexible substrate 23 (shown in FIG. 2 and FIG. 5) provided at the central part of the flexure body 21. The other end of the flexible substrate 23 is connected to the processing circuit in the casing 15. The electric signal output from the bridge circuit is supplied to the processing circuit via the flexible substrate 23, and a torque detection signal is generated as a sensor signal in the processing circuit.

The flexure body 21 has, for example, a rectangular shape, and the length of the flexure body 21 is made larger than the length of the third bottom part 33. The flexure body 21 is fixed to the first structure 11 and the second structure 12 by a fixing device 40a and a fixing device 40b in a state of being arranged in the recess portion 30.

More specifically, as shown in FIG. 5, a first end of the flexure body 21 is placed on the second bottom part 32a of the first structure 11, and a second end of the flexure body 21 is placed on the second bottom part 32b of the second structure 12. That is, the flexure body 21 is arranged between the opening part 34a of the second bottom part 32a of the first structure 11 and the opening part 34b of the second bottom part 32b of the second structure 12.

A first end of the flexure body 21 is fixed to the first structure 11 by the fixing device 40a arranged in a portion corresponding to the first structure 11 of the recess portion 30, and a second end of the flexure body 21 is fixed to the second structure 12 by the fixing device 40b arranged in a portion corresponding to the second structure 12 of the recess portion 30.

The fixing device 40a and the fixing device 40b have the same configuration, and each of the fixing device 40a and the fixing device 40b comprises a fixing plate 41 serving as a fixing member and a screw 42. In the fixing device 40a, the fixing plate 41 is attached to the first structure 11 by the screw 42 screwed into the opening part 34a. In the fixing device 40b, the fixing plate 41 is attached to the second structure 12 by the screw 42 screwed into the opening part 34b.

The screw 42 is inserted from above the fixing plate 41 and screwed into the opening part 34a of the first structure 11 or the opening part 34b of the second structure 12.

The first end of the flexure body 21 is fixed to the first structure 11 by the fixing plate 41 when the screw 42 of the fixing device 40a is tightened, and the second end of the flexure body 21 is fixed to the second structure 12 by the fixing plate 41 when the screw 42 of the fixing device 40b is tightened.

### (Structure of Fixing Plate)

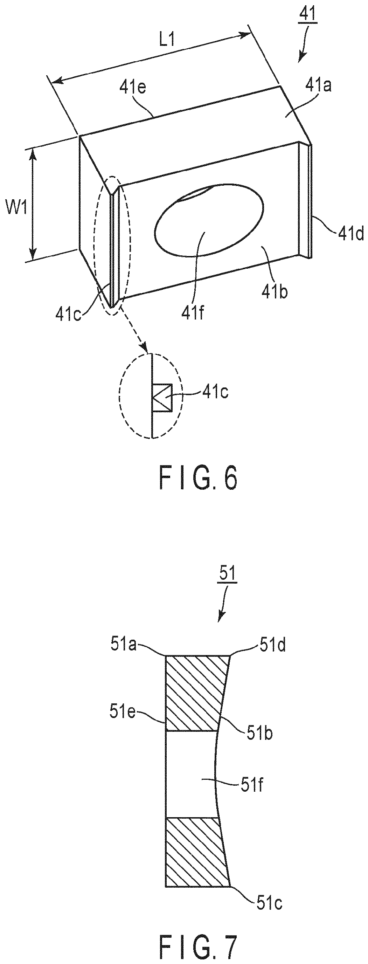

FIG. 6 shows one form of the fixing plate 41 according to the embodiments.

The fixing plate 41 is formed of, for example, the same metal as the first structure 11, but is not limited to this, and may be formed of the other material.

The fixing plate 41 has, for example, a rectangular parallelepiped body 41a. The fixing plate 41 and the body 41a are the same, and the fixing plate 41 is also simply referred to as the body 41a. A first protrusion 41c is provided, for example, along the first side of the bottom surface 41b of the body 41a, and a second protrusion 41d is provided along the second side parallel to the first side. The first protrusion 41c and the second protrusion 41d are linear and project from the bottom surface 41b in the same direction. For this reason, the bottom surface 41b is arranged at a position away from a line which connects the first protrusion 41c to the second protrusion 41d. Furthermore, the body 41a includes an opening part 41f penetrating from the surface 41e to the bottom surface 41b.

A width W1 of the fixing plate 41 is narrower than a width W2 (shown in FIG. 4) of the recess portion 30, and a length L1 of the fixing plate 41 is shorter than a length L2 (shown in FIG. 4) of a portion of the recess portion 30 corresponding to the first structure 11 or a length L3 of a portion corresponding to the second structure 12 of the recess portion 30. The relationship between L2 and L3 is, for example, L2<L3, but is not limited to this. The length of the fixing plate 41 may be a length which allows the fixing plate 41 to contact the first bottom part 31a and the first end of the flexure body 21 or to contact the first bottom part 31b and the second end of the flexure body 21 when the screw 42 is tightened.

More specifically, as shown in FIG. 4 and FIG. 5, in a state where the two fixing plates 41 are inserted into the part of the recess portion 30 corresponding to the first structure 11 and the part thereof corresponding to the second structure 12, the first protrusion 41c of each fixing plate 41 may be able to make line contact with the first bottom part 31a or the first bottom part 31b, and the second protrusion 41d may be able to make line contact with the first end or the second end of the flexure body 21.

Thus, the screw 42 is inserted into the opening part 41f of each fixing plate 41 and is screwed into the opening part 34a of the first structure 11 or the opening part 34b of the second structure 12, while the two fixing plates 41 are inserted into the recess portion 30 and, as a result, the first protrusion 41c of the fixing plate 41 is brought into line contact with the first bottom part 31a or the first bottom 31b, and the second protrusion 41d is brought into line contact with the first end or the second end of the flexure body 21.

As shown in FIG. 6, the first protrusion 41c of the fixing plate 41 is linear, and the first protrusion 41c makes line contact with the first bottom part 31b. However, the embodiments are not limited to this but, for example, the first protrusion 41c may be a point-like protrusion and the first protrusion 41c may be brought into point contact with the first bottom part 31b as shown by the broken line in FIG. 6. The point-like first protrusion 41c is provided at substantially the center of the first side but, for example, two first protrusions may be provided at both ends of the first side. Alternatively, three first protrusions may be provided at the center and both ends of the first side.

### (Effect of Basic Configuration of Embodiments)

According to the above embodiments, the fixing plate 41 is provided with the first protrusion 41c and the second protrusion 41d, and the first protrusion 41c is brought into line contact with the first bottom part 31a or the first bottom portion 31b, and the second protrusion 41d is brought into line contact with the first end or the second end of the flexure body 21, by tightening the screws 42. For this reason, for example, the flexure body 21 can be fixed to the first structure 11 and the second structure 12 with a higher pressure than in the case where the flexure body and the fixing plate are in surface contact with each other. Therefore, the variation in the fixing strength of the flexure body 21 to the first structure 11 and the second structure 12 can be reduced, and deterioration in the sensor performance can be prevented.

Moreover, according to the fixing method using the fixing plate 41 of the embodiments, the flexure body 21 can be fixed to the first structure 11 and the second structure 12 by simply bringing the second protrusion 41d of the fixing plate 41 into line contact with the flexure body 21. For this reason, thermal deformation of the flexure body 21 and the strain gauges can be prevented similarly to a case where, for example, the flexure body 21 is fixed to the first structure 11 and the second structure 12 by welding. In addition, a low rigidity portion does not intervene between the flexure body 21, and the first structure 11 and the second structure 12 unlike a case where the flexure body 21 is fixed with an adhesive. Therefore, according to the fixing method using the fixing plate 41 of the embodiments, the force applied to the first structure and the second structure 12 can be reliably transmitted to the flexure body 21, and the performance of the sensor can be improved.

Moreover, each of the fixing devices 40a and 40b is composed of one fixing plate 41 and one screw 42. For this reason, it is possible to reduce the number of components and to prevent the fixing devices 40a and 40b from becoming large and the torque sensor 10 from becoming large.

Furthermore, since each of the fixing devices 40a and 40b is composed of one fixing plate 41 and one screw 42, the fixing devices 40a and 40b can easily be assembled.

In addition, the screw 42 is inserted from the upper side of the fixing plate 41 and screwed into the opening part 34a of the first structure 11 or the opening part 34b of the second structure 12. For this reason, for example, the assembly work can be facilitated as compared with a case where the screw 42 is inserted from the opening part 34a side of the first structure 11 or the opening part 34b side of the second structure 12 and screwed into the fixing plate 41.

### (Modified Examples of Fixing Plate)

### (First Modified Example)

FIG. 7 shows a first modified example of the fixing plate. In the case of the embodiments shown in FIG. 6, the body 41a is provided with the first protrusion 41c and the second protrusion 41d on the flat bottom surface 41b.

In contrast, in the first modified example, for example, a rectangular parallelepiped body 51a of a fixing plate 51 has a curved bottom surface 51b, and a first side of the bottom surface 51b functions as a first protrusion 51c, and a second side parallel to the first side functions as a second protrusion 51d. For this reason, the curved bottom surface 51b is arranged at a position separated from a line connecting the first protrusion 51c and the second protrusion 51d. An opening part 51f penetrating a surface 51e is provided at the center of the bottom surface 51b.

The same advantage as that of the above-described embodiments can be obtained from the above-described first modified example. Moreover, according to the second modified example, since the bottom surface 51b of the body 51a is curved, the elasticity of the fixing plate 51 is improved. Therefore, the flexure body 21 can be reliably fixed by the fixing plate 51.

Furthermore, according to the first modified example, since the first protrusion 51c and the second protrusion 51d can be formed by only processing the bottom surface of the body 51a into a curved shape, the production can be facilitated.

### (Second Modified Example)

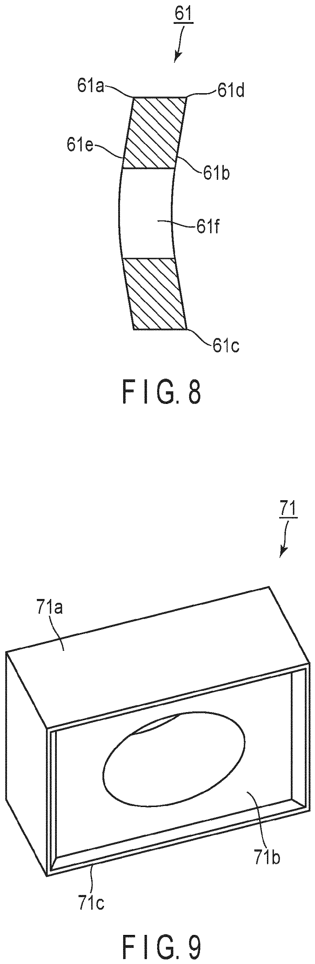

FIG. 8 shows a second modified example of the fixing plate. In the first modified example shown in FIG. 7, the body 51a has the curved bottom surface 51b.

In contrast, in the second modified example, for example, a rectangular parallelepiped body 61a of a fixing plate 61 is entirely curved. Therefore, the body 61a has a curved bottom surface 61b, a first side of the bottom surface 61b functions as a first protrusion 61c, and a second side parallel to the first side functions as a second protrusion 61d. For this reason, the curved bottom surface 61b is arranged at a position separated from a line connecting the first protrusion 61c and the second protrusion 61d. An opening part 61f penetrating a surface 61e is provided at the center of the bottom surface 61b.

The same advantage as that of the above-described embodiments can also be obtained from the above-described second modified example. Moreover, according to the second modified example, since the entire body 61a is curved, the elasticity of the fixing plate 61 is improved. Therefore, the flexure body 21 can be fixed more reliably by the fixing plate 61.

Furthermore, according to the second modified example, since the first protrusion 61c and the second protrusion 61d can be formed by only processing the main body 61a into a curved shape, the production can be facilitated.

### (Third Modified Example)

FIG. 9 shows a third modified example of the fixing plate. In the embodiments and each of the modified examples described above, the body of the fixing plate is provided with protrusions on two sides.

In contrast, in the third modified example shown in FIG. 9, a body 71a of a fixing plate 71 is, for example, a rectangular parallelepiped, and protrusions 71c are provided along four sides of a bottom surface 71b of the body 71a. That is, the protrusions 71c are provided around the bottom surface 71b.

The same advantage as that of the above-described embodiments can also be obtained from the above-described third modified example. Moreover, the rigidity of the fixing plate 71 can be increased and the flexure body 21 can be fixed more reliably, by providing the protrusions 71c around the bottom surface 71b.

Furthermore, it has been described that the shape of the body 71a of the fixing plate 71 is a rectangular parallelepiped and the shape of the bottom surface 71b is rectangular, but the shape of the main body 71a of the fixing plate 71 can be set to a cube and the shape of the bottom surface 71b can be set to a square. In this case, the flexure body 21 can be fixed by using any two parallel sides of the four sides. For this reason, since the orientation of the fixing plate 71 to the recess portion 30a does not need to be considered, the assembly work can be simplified.

The protrusions can be provided around the body in the first and second modified examples, too.

### (First Embodiment)

In a first embodiment, the changed points will be mainly described with reference to the above-mentioned basic configuration, but the first embodiment may also be changed with reference to the first to third modified examples. This matter may also be applied to the following embodiments.

In the present embodiment, the structure in which the fixing plate 41 is brought into line contact or point contact with the first structure 11 or the second structure 12 and the flexure body 21 will be mainly described, but the fixing plate 41 may be brought into surface contact or any other contact. This matter may also be applied to the following embodiments.

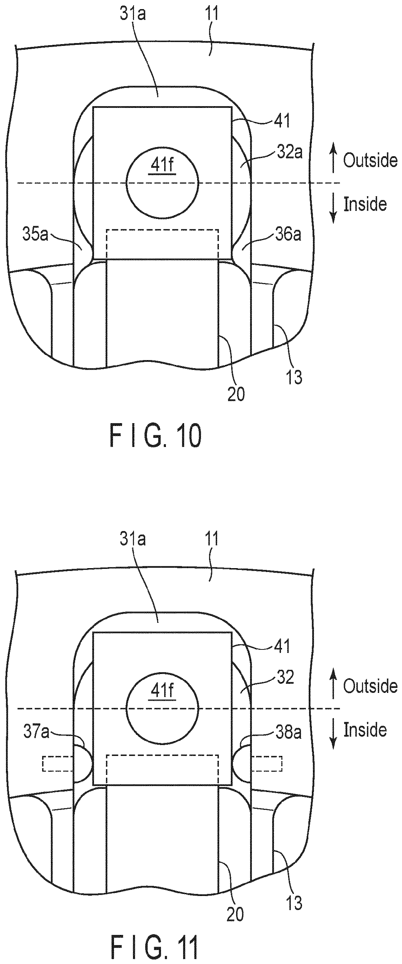

FIG. 10 is a configuration diagram showing the vicinity of the first structure 11 provided with rotation stopping parts 35a and 36a according to the first embodiment of the present invention. In addition, rotation stopping parts 35a, 35b, 36a, and 36b are shown in FIG. 3 and FIG. 4.

The fixing device 40a comprises two rotation stopping parts 35a and 36a. The fixing device 40b comprises two rotation stopping parts 35b and 36b. The rotation stopping parts 35a and 36a in the fixing device 40a and the rotation stopping parts 35b and 36b in the fixing device 40b are configured in the same manner. The rotation stopping parts 35a to 36b prevent the fixing plate 41 from rotating together with the rotation of the screw 42 when the fixing plate 41 is attached with the screw 42.

The rotation stopping parts 35a to 36b are formed on the inner surface on both sides where the fixing plate 41 is located, of the recess portion 30 of the third structure 13. The surface of each of the rotation stopping parts 35a to 36b is a curved surface which is curved such that an apex portion extending linearly in the z-axis direction (rotation axis direction of torque) is formed by folding a plane into two pieces. The rotation stopping parts 35a to 36b are formed integrally with the third structure 13. The rotation stopping parts 35a to 36b may not be formed integrally with the third structures 13 but may be formed of the other members.

In a case where the screw 42 is a right-handed screw, which is tightened when rotated to the right, if the rotation stopping part 35a and 35b are located on the right side toward the direction of the strain sensor 20 side, on the side (inside) closer to the strain sensor 20 than the center of the opening part 41f, the other rotation stopping parts 36a and 36b may not be provided. In contrast, in a case where the screw 42 is a left-handed screw, if the rotation stopping part 36a and 36b are located on the left side toward the direction of the strain sensor 20 side, on the side (inside) closer to the strain sensor 20 than the center of the opening part 41f, the other rotation stopping parts 35a and 35b may not be provided.

In a case where the rotation stopping part is provided on the outer side from the center of the opening part 41f (i.e., the side opposite to the strain sensor 20), the rotation stopping part may be provided on the left side toward the direction of the strain sensor 20 side when the screw 42 is a right-handed screw, or the rotation stopping part may be provided on the right side toward the direction of the strain sensor 20 side when the screw 42 is a left-handed screw.

The function of the rotation stopping part 35a provided on the first structure 11 side in a case where the screw 42 is a right-handed screw will be described with respect to FIG. 10, and the descriptions may be applied to the function of the rotation stopping part 36a provided on the side opposite to the rotation stopping part 35a in a case where the screw 42 is a left-handed screw.

In a state where the fixing plate 41 is to be arranged at an appropriate position before being fixed by the screw 42, the fixing plate 41 and the rotation stopping part 35a are substantially in contact with each other. However, a slight gap may be formed between the fixing plate 41 and the rotation stopping part 35a.

The screw 42 is rotated to fix the fixing plate 41. At this time, when the fixing plate 41 is to rotate together with the screw 42, the strain sensor 20 side portion on the side surface of the fixing plate 41 on the rotation stopping part 35a side is brought into line contact in the z-axis direction with an apex portion of the rotation stopping part 35a extending in the z-axis direction. As a result, the fixing plate 41 does not rotate any more, but only the screw 42 rotates.

The rotation stopping parts 35a to 36b may be formed such that the apex portion is divided into several parts to be arranged in the z-axis direction and that each of the plurality of the apex portions is brought into point contact with the fixing plate 41.

According to the present embodiment, the rotation stopping parts 35a to 36b are provided, the fixing plate 41 to be rotated is brought into line contact with the rotation stopping parts 35a to 36b in the z direction, and the fixing plate 41 can be prevented from rotating and shifting from the position where the fixing plate 41 is appropriately arranged. In addition, when fixing with the screw 42, a jig for preventing the rotation of the fixing plate 41 is not required.

Interference with other axes is suppressed when the strain sensor 20 is brought into line contact (or point contact) and pressed with the fixing plate 41, and the interference with other axes can be further suppressed by forming the rotation stopping parts 35a to 36b in a shape of being brought into line contact with the fixing plate 41.

The interference with other axes can be suppressed by forming the rotation stopping parts 35a to 36b in a shape of being brought into line contact with the fixing plate 41. Furthermore, since the line contact is made in the z-axis direction, a desired effect can be obtained more easily than in the x-axis direction or the y-axis direction.

By providing the rotation stopping parts 35a to 36b on both sides of the fixing plate 41, the rotation stopping parts 35a to 36b can be equipped with a function of positioning the fixing plate 41 or, when the screw 42 is rotated in the direction of becoming loose, the rotation stopping parts 35a to 36b can be equipped with a function of preventing the fixing plate 41 from rotating together and shifting.

### (Second Embodiment)

FIG. 11 is a configuration diagram showing the vicinity of the first structure 11 provided with rotation stopping parts 37a and 38a according to a second embodiment of the present invention.

The rotation stopping parts 37a and 38a are provided instead of the rotation stopping parts 35a and 36a according to the first embodiment shown in FIG. 10. The rotation stopping parts 37a and 38a are formed by forming screw holes at the same positions as the rotation stopping parts 35a and 36a according to the first embodiment on the inner surface of the recess portion 30 and inserting screws into the screw holes. The other points are the same as those of the first embodiment. For example, only one of the rotation stopping parts 37a and 38a that corresponds to the rotation direction of the screw 42 may be provided.

According to the present embodiment, the following advantages can be obtained in addition to the advantages according to the first embodiment.

Since the rotation stopping parts 37a and 38a are formed by inserting the screws, they can easily be configured. In addition, since the fixing plate 41 is brought into point contact with the apex portions of the screw heads of the rotation stopping parts 37a and 38a such that its rotation is prevented, the interference with other axes can be more suppressed than in the case of being brought into line contact.

In the present embodiment, the configuration in which the screws serving as the rotation stoppers 37a and 38a are provided on the inner surfaces of the recess portion 30 has been described, but the embodiment may be configured in the same manner by providing the screws on the fixing plate 41 at the positions corresponding to the rotation stopping parts 37a and 38a.

### (Third Embodiment)

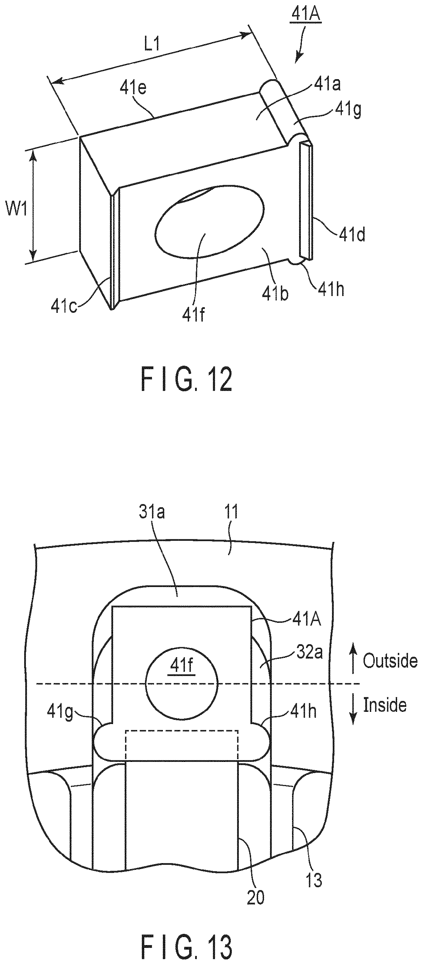

FIG. 12 is a perspective view showing a fixing plate 41A according to the third embodiment of the invention as viewed from below. FIG. 13 is a configuration diagram showing the vicinity of a first structure 11 provided with rotation stopping parts 41g and 41h according to the third embodiment of the invention.

In the present embodiment, the rotation stopping parts 41g and 41h are provided instead of the rotation stopping parts 35a and 36a according to the first embodiment. The fixing plate 41A has a shape in which the rotation stopping parts 41g and 41h are provided on the fixing plate 41 according to the first embodiment shown in FIG. 6. The other points are the same as those of the first embodiment. For example, only one of the rotation stopping parts 41g and 41h that corresponds to the rotation direction of the screw 42 may be provided.

The rotation stopping parts 41g and 41h are provided on the side closer to the strain sensor 20 (inner side) than the center of the opening part 41f, on the right and left side surfaces with respect to the strain sensor 20 side of the fixing plate 41A, in a state where the fixing plate 41A is appropriately arranged. That is, the rotation stopping parts 41g and 41h are arranged at substantially the same positions as the rotation stopping parts 35a and 36a according to the first embodiment. The surfaces of the rotation stopping parts 41g and 41h are formed in the same shape as the surfaces of the rotation stopping parts 35a to 36b according to the first embodiment.

Similarly to the first embodiment, when the fixing plate 41A is to rotate together with the screw 42, apex portions of the rotation stopping parts 41g and 41h of the fixing plate 41A, which extend in the z-axis direction, are brought into line contact in the z-axis direction with an inner surface of a recess portion 30 of a third structure 13, which is opposed to the rotation stopping parts 41g and 41h. As a result, the fixing plate 41A does not rotate any more, but only the screw 42 rotates.

The rotation stopping parts 41g and 41h may be formed such that each apex portion is divided into several parts to be arranged in the z-axis direction and that each of the plurality of apex portions is brought into point contact with the inner surface of the recess portion 30.

According to the present embodiment, the same advantages as those of the first embodiment can be obtained by providing the rotation stopping parts 41g and 41h on the fixing plate 41A.

### (Fourth Embodiment)

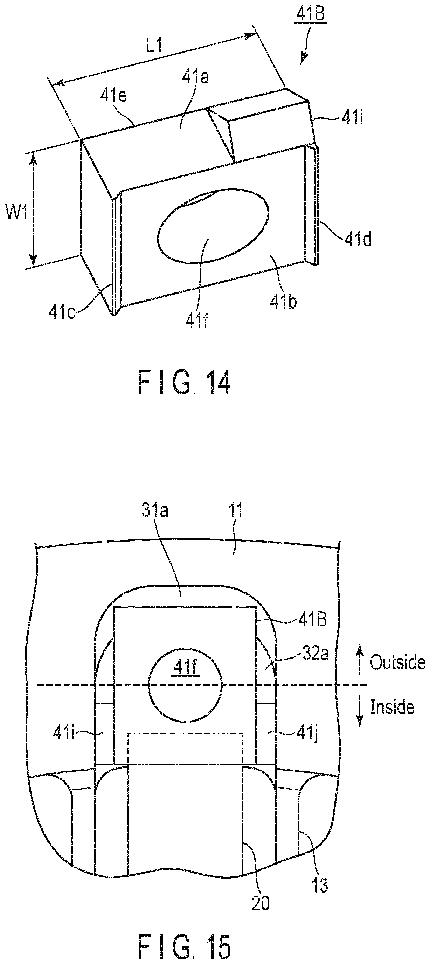

FIG. 14 is a perspective view showing a fixing plate 41B according to a fourth embodiment of the invention as viewed from below. FIG. 15 is a configuration diagram showing rotation stopping parts 41i and 41j provided on a side of a first structure 11 according to the fourth embodiment of the invention.

In the present embodiment, a fixing plate 41B is provided instead of the fixing plate 41A according to the third embodiment shown in FIG. 12. The fixing plate 41B has a shape in which the rotation stopping parts 41i and 41j are provided instead of the rotation stopping parts 41g and 41h on the fixing plate 41A according to the third embodiment. The other points are the same as those of the third embodiment. For example, only one of the rotation stopping parts 41i and 41j that corresponds to the rotation direction of the screw 42 may be provided.

The rotation stopping parts 41i and 41j are the same as the rotation stopping parts 41g and 41h according to the third embodiment except that the surface shapes thereof are different. The surface of each of the rotation stopping parts 41i and 41j is protruding shapes such that the apex portion is formed to extend linearly in the y-axis direction (i.e., a direction perpendicular to the rotation axis of torque or a longitudinal direction of the strain sensor 20) by folding a plane into two pieces and that its cross-section is shaped in a triangle. The rotation stopping parts 41i and 41j may be shaped such that not only the strain sensor 20 side portion on the side surface of the fixing plate 41B, but the entire side surface thereof becomes the rotation stopping parts 41i and 41j. In addition, the surfaces of the rotation stopping parts 41i and 41j may have a curved shape formed by curving a plane.

When the fixing plate 41B is to rotate together with the screw 42, apex portions of the rotation stopping parts 41i and 41j of the fixing plate 41B, which extend in the y-axis direction, are brought into line contact in the y-axis direction with an inner surface of a recess portion 30 of a third structure 13, which is opposed to the rotation stopping parts 41i and 41j. As a result, the fixing plate 41B does not rotate any more, but only the screw 42 rotates. In the other respects, the fixing plate 41B functions in the same manner as that in the first embodiment.

The rotation stopping parts 41i and 41j may be formed such that each apex portion is divided into several parts to be arranged in the y-axis direction and that each of the plurality of apex portions is brought into point contact with the inner surface of the recess portion 30.

According to the present embodiment, the same advantages as those of the first embodiment can be obtained by providing the rotation stopping parts 41i and 41j on the fixing plate 41B, and bringing the rotation stopping parts 41i and 41j into contact with the inner surfaces of the recess portion 30 in the y-axis direction.

In each embodiment, the fixing plates 41 to 41B are brought into line contact or point contact with the other parts (structures 11 to 13, and the like) by providing the rotation stopping parts, but may be brought into contact with not only the parts described here, but also any parts in the torque sensor 10.

### (Fifth Embodiment)

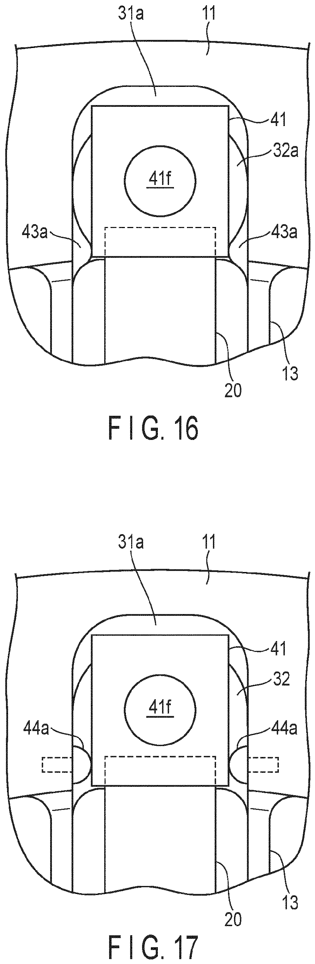

FIG. 16 is a configuration diagram showing the vicinity of a first structure 11 provided with positioning parts 43a according to a fifth embodiment of the invention. The positioning parts 43a are provided in the same manner as the rotation stopping parts 35a and 36a according to the first embodiment shown in FIG. 3 and FIG. 4. A positioning part 43b is provided in the same manner as the rotation stopping parts 35b and 36b according to the first embodiment shown in FIG. 3 and FIG. 4.

A fixing device 40a comprises two positioning parts 43a. A fixing device 40b comprises two positioning parts 43b. The positioning part 43a in the fixing device 40a and the positioning part 43b in the fixing device 40b are configured in the same manner. The positioning parts 43a and 43b are provided such that the fixing plate 41 is arranged at an appropriate position.

The positioning parts 43a and 43b are formed on both sides of the inner surfaces of the recess portions 30 of the third structure 13, which are opposed to the fixing plates 41. In the figures, the positioning parts 43a and 43b are provided more closely to a strain sensor 20 side than a center of the opening part 41f, but may be provided at the center or more closely to a side opposite to the strain sensor 20 than the center.

An interval between a set of two positioning parts 43a and 43b provided on each of the first structure 11 side and the second structure 12 side is desirably as small as possible as long as a width in which the fixing plate 41 can be inserted is secured. A width between the set of positioning parts 43a and 43b is therefore substantially equal to the width of the fixing plate 41. Thus, the fixing plate 41 is completely in close contact with each of the positioning parts 43a and 43b in a state in which the fixing plate 41 is inserted between the set of positioning parts 43a and 43b. At this time, the shape or size of the positioning parts 43a and 43b are adjusted such that the fixing plate 41 is arranged at an appropriate position.

The surface of each of the positioning parts 43a and 43b is a curved surface which is curved such that an apex portion extending linearly in the z-axis direction (rotation axis direction of torque) is formed by folding a plane into two pieces. The positioning parts 43a and 43b are formed integrally with the third structure 13. The positioning parts 43a and 43b may not be formed integrally with the third structures 13 but may be formed of the other members.

Functions of a set of positioning parts 43a provided on the first structure 11 side will be described with reference to FIG. 16.

When the fixing plate 41 is inserted between the two positioning parts 43a, the fixing plate 41 is naturally arranged at an appropriate position. In this state, the side surfaces of the fixing plate 41 on the positioning part 43a sides are brought into line contact with the apex portions of the respective two positioning parts 43a that extend in the z-axis direction, in the z-axis direction. In this state, the fixing plate 41 is fixed by the screw 42. At this time, the positioning parts 43a may serve as rotation stoppers such that the fixing plate 41 does not rotate together with the screw 42.

The positioning parts 43a and 43b may be formed such that each apex portion is divided into several parts to be arranged in the z-axis direction and that each of the plurality of the apex portions is brought into point contact with the fixing plate 41.

According to the present embodiment, when the positioning parts 43a and 43b are provided, the fixing plate 41 is naturally arranged at an appropriate position by only inserting the fixing plate 41 between the set of positioning parts 43a and 43b. In particular, the fixing plate 41 is appropriately arranged in the x-axis direction (i.e., a direction perpendicular to each of the longitudinal direction of the strain sensor 20 and the rotation axis direction of the torque).

The interference with other axes is suppressed when the strain sensor 20 is brought into line contact (or point contact) and pressed with the fixing plate 41, and the interference with other axes is further suppressed by forming the positioning parts 43a and 43b in a shape of being brought into line contact with the fixing plate 41. Furthermore, since the line contact is made in the z-axis direction, a desired effect can be obtained more easily than in the x-axis direction or the y-axis direction.

### (Sixth Embodiment)

FIG. 17 is a configuration diagram showing the vicinity of the first structure 11 provided with positioning parts 44a according to a sixth embodiment of the invention.

The positioning parts 44a are provided instead of the positioning parts 43a according to the fifth embodiment shown in FIG. 16. The positioning parts 44a are formed by forming screw holes at the same positions as the positioning parts 43a according to the fifth embodiment on the inner surfaces of the recess portion 30 and inserting screws into the screw holes. The other points are the same as those of the fifth embodiment.

According to the present embodiment, the following advantages can be obtained in addition to the advantages according to the fifth embodiment.

Since the positioning parts 44a are formed by inserting screws, they can easily be configured. In addition, since the fixing plate 41 is brought into point contact with the apex portions of the screw heads of the positioning parts 44a, the interference with other axes can be more suppressed than in the case of being brought into line contact.

In the present embodiment, the configuration in which the screws serving as the positioning parts 44a are provided on the inner surfaces of the recess portion 30 has been described, but the embodiment may be configured in the same manner by providing the screws on the fixing plate 41 at the positions corresponding to the positioning parts 44a.

### (Seventh Embodiment)

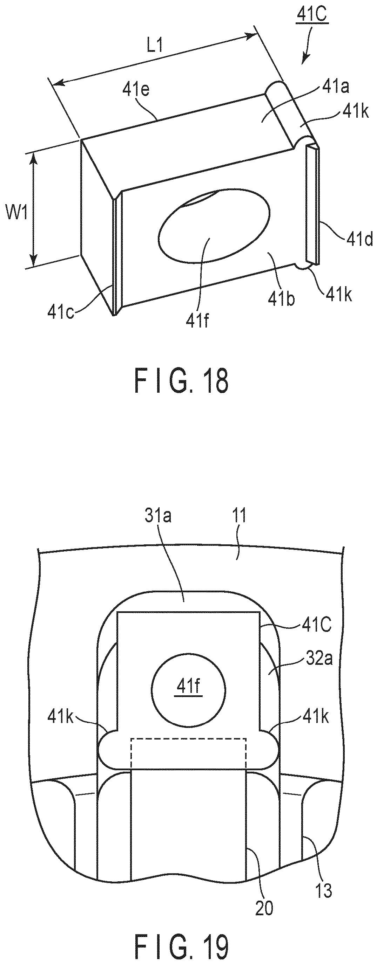

FIG. 18 is a perspective view showing a fixing plate 41C according to a seventh embodiment of the invention as viewed from below. FIG. 19 is a configuration diagram showing the vicinity of the first structure 11 provided with positioning parts 41k according to the seventh embodiment.

In the present embodiment, the positioning parts 41k are provided instead of the positioning parts 43a and 43b according to the fifth embodiment. The fixing plate 41C has a shape in which two positioning parts 41k are provided on the fixing plate 41 according to the fifth embodiment shown in FIG. 6. The other points are the same as those of the fifth embodiment.

The positioning parts 41k are provided on both side surfaces of the fixing plate 41C, respectively. The positioning parts 41k may be formed integrally with the fixing plate 41C or may not be formed integrally but may be formed of the other members. In the figures, the positioning parts 41k are provided more closely to a strain sensor 20 side than a center of the opening part 41f, but may be provided at the center or more closely to a side opposite to the strain sensor 20 than the center. The surface of each of the positioning parts 41k is formed in the same shape as the surface of each of the positioning parts 43a and 43b according to the fifth embodiment.

A width between apex portions of the positioning parts 41k on both sides of the fixing plate 41C is the maximum width of the fixing plate 41C. The maximum width is substantially equal to the width of the opposed inner surfaces of the recess portion 30, which are located on both sides of the fixing plate 41C. If the fixing plate 41C can be arranged, this maximum width is desirably as wide as possible. As a result, when the fixing plate 41C is arranged in the recess portion 30, both side surfaces of the fixing plate 41C are completely in close contact with the inner surface of the recess portion 30. At this time, the shape and size of the positioning parts 41k are adjusted such that the fixing plate 41C is arranged at an appropriate position.

When the fixing plate 41C is inserted between the inner surfaces of the recess portion 30, the fixing plate 41C is naturally arranged at an appropriate position, similarly to the fifth embodiment. In this state, the apex portions of the positioning parts 41k on both sides of the fixing plate 41C extending in the z-axis direction are in line contact with the inner surface of the recess portion 30 in the z-axis direction. In this state, the fixing plate 41C is fixed by the screw 42. At this time, the positioning parts 41k may serve as rotation stoppers such that the fixing plate 41C does not rotate together with the screw 42.

The positioning parts 41k may be formed such that each apex portion is divided into several parts to be arranged in the z-axis direction and that each of the plurality of apex portions is brought into point contact with the inner surface of the recess portion 30.

According to the present embodiment, the same advantages as those of the fifth embodiment can be obtained by providing the positioning parts 41k on the fixing plate 41C.

### (Eighth Embodiment)

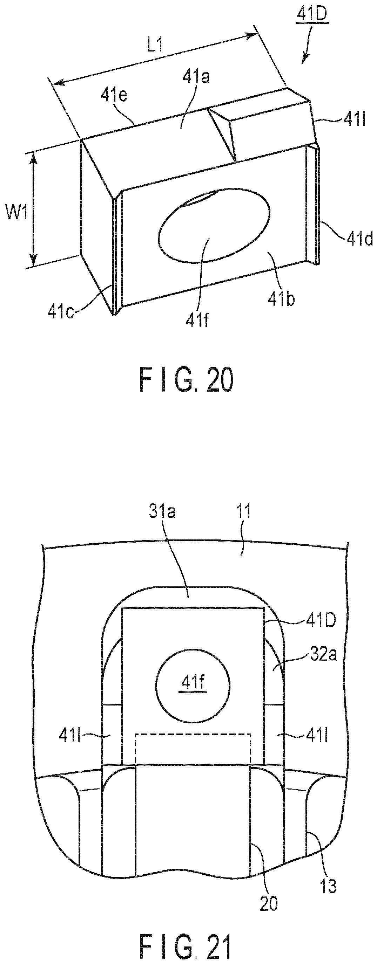

FIG. 20 is a perspective view showing a fixing plate 41D according to an eighth embodiment of the invention as viewed from below. FIG. 21 is a configuration diagram showing a positioning part 411 provided on the first structure 11 side according to the eighth embodiment.

In the present embodiment, the fixing plate 41D is provided instead of the fixing plate 41C according to the seventh embodiment shown in FIG. 18. The fixing plate 41D has a shape in which the positioning part 411 is provided instead of the positioning part 41k in the fixing plate 41C according to the seventh embodiment. The other points are the same as those of the seventh embodiment.

The positioning part 411 is the same as the positioning part 41k according to the seventh embodiment except that the surface shape is different. The surface of the positioning part 411 is a protruding shape such that an apex portion is formed to extend linearly in the y-axis direction (i.e., a direction perpendicular to the rotation axis of torque or a longitudinal direction of the strain sensor 20) by folding a plane into two pieces and that its cross-section is shaped in a triangle. The positioning part 411 may be shaped such that not only a part of the side surface of the fixing plate 41D but the entire side surface becomes the positioning part 411. In addition, the surface of the positioning part 411 may be a curved surface formed by curving a plane. The shape and the size of the positioning part 411 are adjusted such that the fixing plate 41D is arranged at an appropriate position in the recess portion 30, similarly to the seventh embodiment.

When the fixing plate 41D is inserted between the inner surfaces of the recess portion 30, the fixing plate 41D is naturally arranged at an appropriate position. In this state, an apex portion of each of positioning parts 411 on both sides of the fixing plate 41D, which extends in the y-axis direction, is in line contact with the inner surface of the recess portion 30 in the y-axis direction. In this state, the fixing plate 41D is fixed by the screw 42. The other points are the same as those of the seventh embodiment.

The positioning parts 41k may be formed such that the apex portion is divided into several parts to be arranged in the y-axis direction and that each of the plurality of apex portions is brought into point contact with the inner surface of the recess portion 30.

According to the present embodiment, the positioning part 411 is provided on the fixing plate 41D, the positioning part 411 and the inner surface of the recess portion 30 are brought into contact with each other in the y-axis direction, and the same advantages as those of the fifth embodiment can be thereby obtained.

### (Ninth Embodiment)

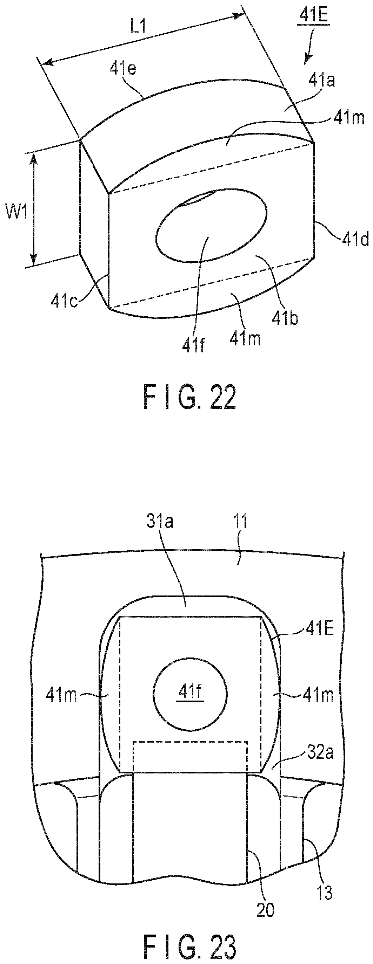

FIG. 22 is a perspective view showing fixing plates 41E according to a ninth embodiment of the invention as viewed from below. FIG. 23 is a configuration diagram showing the positioning parts 41m provided on the first structure 11 side according to the ninth embodiment.

In the present embodiment, the fixing plate 41E is provided instead of the fixing plate 41C according to the seventh embodiment shown in FIG. 18. The fixing plate 41E has a shape in which the positioning parts 41m are provided instead of the positioning parts 41k in the fixing plate 41C according to the seventh embodiment. The other points are the same as those of the seventh embodiment.

The positioning parts 41m are the same as the positioning parts 41k according to the seventh embodiment except that the shape is different. The positioning parts 41m are shaped to be formed on the entire side surfaces of the fixing plate 41E, respectively. The surface of each positioning part 41m has a protruding shape formed on a gentle curved surface such that an apex portion extending linearly in the z-axis direction (i.e., the rotation axis direction of torque) is formed in the center of the side surface of the fixing plate 41E. The shape and size of each positioning part 41m are adjusted such that the fixing plate 41E is arranged at an appropriate position in the recess portion 30, similarly to the seventh embodiment.

When the fixing plate 41E is inserted between the inner surfaces of the recess portion 30, the fixing plate 41E is naturally placed at an appropriate position. In this state, the apex portions of the positioning parts 41m on both sides of the fixing plate 41E, which extend in the z-axis direction, are in line contact with the inner surfaces of the recess portion 30 in the z-axis direction, respectively. In this state, the fixing plate 41E is fixed by the screw 42. The other points are the same as those of the seventh embodiment.

The positioning parts 41m may be formed such that each apex portion is divided into several parts to be arranged in the z-axis direction and that each of the plurality of apex portions is brought into point contact with the inner surface of the recess portion 30.

According to the present embodiment, the positioning parts 41m are provided on the fixing plate 41E, the positioning parts 41m and the inner surface of the recess portion 30 are brought into contact with each other in the z-axis direction, and the same advantages as those of the fifth embodiment can be thereby obtained.

### (Tenth Embodiment)

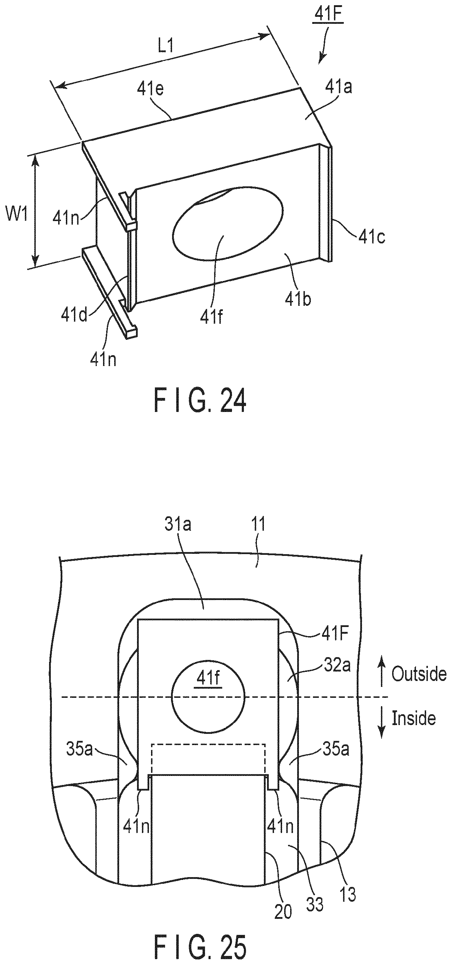

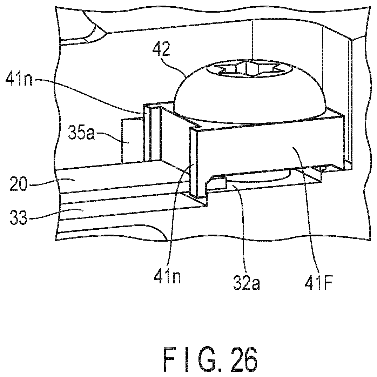

FIG. 24 is a perspective view showing a fixing plate 41F according to a tenth embodiment of the invention as viewed from below. FIG. 25 is a configuration diagram showing positioning parts 41n provided on the first structure 11 side according to the tenth embodiment. FIG. 26 is a perspective view showing the positioning parts 41n provided on the first structure 11 side according to the tenth embodiment.

In the present embodiment, the positioning parts 41n are added to the fixing plate 41 according to the fifth embodiment shown in FIG. 16. The other points are the same as those of the fifth embodiment. The positioning parts 43a and 43b may not be provided.

The positioning parts 41n are provided at both ends of the surface of the fixing plate 41F on the strain sensor 20 side, respectively. The positioning parts 41n may be formed integrally with the fixing plate 41F or may not be formed integrally but may be formed of the other members.

The positioning parts 41n has a shape of protruding toward the strain sensor 20 side and extending to the bottom surface side, on the fixing plate 41F. The strain sensor 20 is located between lower parts of the two positioning parts 41n. A protruding portion is provided to be in line contact (or point contact) with a side surface formed by a step between the second bottom part 32a and the third bottom part 33 of the recess portion 30, at the lower end of each of the two positioning parts 41n. The protruding portion may be provided so as to make line contact or point contact with the third bottom part 33.

The fixing plate 41F is naturally arranged at an appropriate position by inserting the fixing plate 41F between the inner surfaces of the recess portion 30, and bringing the protruding portion provided at the lower end of the positioning part 41n into contact with the step between the second bottom part 32a and the third bottom part 33 of the recess portion 30. The other points are the same as those of the fifth embodiment.

According to the present embodiment, in particular, the position of the fixing plate 41F in the y-axis direction (i.e., a longitudinal direction of the strain sensor 20) can be arranged more accurately by providing the positioning parts 41n on the fixing plate 41F, in addition to the advantages of the fifth embodiment.

In each embodiment, the fixing plates 41 to 41F are brought into line contact or point contact with the other parts (structures 11 to 13, and the like) by providing the positioning parts, but may be brought into contact with not only the parts described here, but also any parts in the torque sensor 10.

The present invention is not limited to the embodiments described above but the constituent elements of the invention can be modified in various manners without departing from the spirit and scope of the invention. Various aspects of the invention can also be extracted from any appropriate combination of constituent elements disclosed in the embodiments. Some constituent elements may be deleted in all of the constituent elements disclosed in the embodiments. The constituent elements described in different embodiments may be combined arbitrarily.

## Claims

1. A strain sensor fixing device **characterized by** comprising:
a fixing member including a first side, a second side parallel to the first side, and a surface provided between the first side and the second side and including an opening part, the first side being brought into contact with the first structure, the second side being brought into contact with an end part of the flexure body constituting the strain sensor provided on the first structure;
a screw inserted into the opening part and screwed into the first structure; and
a rotation stopping part bringing the fixing member into line contact or point contact with the other part to prevent rotation of the fixing member.

2. The strain sensor fixing device of claim 1, **characterized in that**
the surface is provided at a position separated from a line connecting the first side and the second side,
the first side is brought into line contact or point contact with the first structure, and
the second side is brought into line contact or point contact with the end part of the flexure body.

3. The strain sensor fixing device of claim 1, **characterized in that**
the rotation stopping part brings the fixing member into line contact or point contact with the other part in a rotation axis direction of torque.

4. The strain sensor fixing device of claim 1, **characterized in that**
the rotation stopping part brings the fixing member into line contact or point contact with the other part in a direction perpendicular to a rotation axis of torque.

5. The strain sensor fixing device of claim 1, **characterized in that**
the rotation stopping part is provided more closely to the strain sensor side than a center of the opening part.

6. The strain sensor fixing device of claim 5, **characterized in that**
the rotation stopping part is not provided more closely to a side opposite to the strain sensor than the center of the opening part.

7. The strain sensor fixing device of claim 1, **characterized in that**
the rotation stopping part is provided on the fixing member.

8. The strain sensor fixing device of claim 1, **characterized in that**
the rotation stopping part is provided on the other part.

9. The strain sensor fixing device of claim 1, **characterized in that**
the rotation stopping part includes a screw.

10. A torque sensor **characterized by** comprising:
a first structure;
a second structure;
a plurality of third structures connecting the first structure and the second structure;
a flexure body constituting a strain sensor provided between the first structure and the second structure;
a first fixing device provided on the first structure to fix a first end part of the flexure body to the first structure; and
a second fixing device provided on the second structure to fix a second end part of the flexure body to the second structure, wherein
the first fixing device and the second fixing device each includes:
a fixing member including a first side, a second side parallel to the first side, and a surface provided between the first side and the second side and including an opening part, the first side being brought into contact with the first structure, the second side being brought into contact with an end part of the flexure body constituting the strain sensor provided on the first structure;
a screw inserted into the opening part and screwed into the first structure; and
a rotation stopping part bringing the fixing member into line contact or point contact with the other part to prevent rotation of the fixing member.

11. A strain sensor fixing device **characterized by** comprising:
a fixing member including a first side, a second side parallel to the first side, and a surface provided between the first side and the second side and including an opening part, the first side being brought into contact with the first structure, the second side being brought into contact with an end part of the flexure body constituting the strain sensor provided on the first structure;
a screw inserted into the opening part and screwed into the first structure; and
a positioning part bringing the fixing member into line contact or point contact with the other part to position the fixing member.

12. The strain sensor fixing device of claim 11, **characterized in that**
the surface is provided at a position separated from a line connecting the first side and the second side,
the first side is brought into line contact or point contact with the first structure, and
the second side is brought into line contact or point contact with the end part of the flexure body.

13. The strain sensor fixing device of claim 11, **characterized in that**
the positioning part brings the fixing member into line contact or point contact with the other part in a rotation axis direction of torque.

14. The strain sensor fixing device of claim 11, **characterized in that**
the positioning part brings the fixing member into line contact or point contact with the other part in a direction perpendicular to a rotation axis of torque.

15. The strain sensor fixing device of claim 11, **characterized in that**
the positioning part is provided on the fixing member.

16. The strain sensor fixing device of claim 11, **characterized in that**
the positioning part is provided on the other part.

17. The strain sensor fixing device of claim 11, **characterized in that**
the positioning part includes a screw.

18. The strain sensor fixing device of claim 11, **characterized in that**
the positioning part includes:
a first positioning part positioning the fixing member in a first direction perpendicular to a rotation axis of torque; and
a second positioning part positioning the fixing member in a second direction perpendicular to each of the rotation axis of the torque and the first direction.

19. A torque sensor **characterized by** comprising:
a first structure;
a second structure;
a plurality of third structures connecting the first structure and the second structure;
a flexure body constituting a strain sensor provided between the first structure and the second structure;
a first fixing device provided on the first structure to fix a first end part of the flexure body to the first structure; and
a second fixing device provided on the second structure to fix a second end part of the flexure body to the second structure, wherein
the first fixing device and the second fixing device each includes:
a fixing member including a first side, a second side parallel to the first side, and a surface provided between the first side and the second side and including an opening part, the first side being brought into contact with the first structure, the second side being brought into contact with an end part of the flexure body constituting the strain sensor provided on the first structure;
a screw inserted into the opening part and screwed into the first structure; and
a positioning part bringing the fixing member into line contact or point contact with the other part to position the fixing member.
